# EUROPEAN PATENT SPECIFICATION

(11) **EP 2 195 177 B1**
(45) Date of publication and mention of the grant of the patent: **12.01.2011**
(21) Application number: 08804259.3
(22) Date of filing: 16.09.2008
(51) Int. Cl.: B60C 15/06

(54) **HEAVY GOODS VEHICLE TYRE**
REIFEN FÜR SCHWER-NUTZFAHRZEUG
PNEU DE POIDS LOURD

(30) Priority: 20.09.2007 FR 0706650; 20.11.2007 US 3747
(43) Date of publication of application: 16.06.2010
(73) Proprietor: Société de Technologie Michelin, 63000 Clermont-Ferrand (FR); Michelin Recherche et Technique S.A., 1763 Granges-Paccot (CH)
(72) Inventor: COUE, Jean, F-63540 Romagnat (FR); BARBARIN, François, F-63119 Chateaugay (FR)
(74) Representative: Randl, Oliver Georg
(86) International application number: PCT/EP2008/062301
(87) International publication number: WO 2009/037254

(56) References cited:
- EP-A- 1 795 375
- WO-A-02/096675
- WO-A-2004/002756
- FR-A- 2 882 691
- US-A- 5 415 216
- US-B2- 6 736 177

## Description

### Field of the invention

The present invention relates to tyres for industrial vehicles capable of carrying heavy loads, such as « heavy goods » vehicles. It relates more specifically to a design of bead for such tyres, improving the endurance thereof.

### Background

The « bead » of a tyre is that part of the tyre that provides the mechanical connection between the tyre and the wheel to which the tyre is fitted, and which transmits driving and braking torque. It generally comprises an annular reinforcing structure (for example a bead wire) which clamps the tyre onto the rim of the wheel. The connection between the crown of the tyre and the bead is ensured by a carcass reinforcement which is anchored on the annular reinforcing structure, for example by wrapping the reinforcement around the annular reinforcing structure. The space between the carcass reinforcement (or, more specifically, its « incoming portion », that is to say that part of the carcass reinforcement which runs between the crown and the annular reinforcing structure) and that part of the carcass reinforcement which is wrapped around the annular reinforcing structure (and which, hereinafter, will be termed the « wrapped-around portion ») is then filled with a stiff rubber mix which is commonly known by the name of « bead filler ». The expression « rubber mix » designates a rubber compound containing at least an elastomer and a filler.

The bead forms part of regions which are heavily stressed, cyclically, when the tyre is rolling while bearing a heavy load. Since the ability of the bead to withstand damage is a decisive factor in the endurance of the tyre, the improvement of the endurance of the beads has been the objective of numerous research efforts. It has, in particular, been found that bead damage usually occurs at the free ends of the carcass reinforcement. There are two particular factors contributing to this.

First, the beads of a tyre may be exposed to high temperatures, because the beads are situated in the proximity of the brakes which may cause the rim to heat up. The highest temperatures are reached in the middle of the bead filler. If one end of the carcass reinforcement is situated in this region, then separation between this reinforcement and the rubber mix surrounding it may be observed. To overcome this problem, it has been proposed that the end of the carcass reinforcement be kept away from this area by extending its wrapped-around portion radially outwards (i.e. such that the end is farther away from the axis of rotation of the tyre).

Second, the deformation of the bead due to the loading of the tyre may also lead to heating liable to favour the onset of damage. The most heavily mechanically stressed region lies axially on the outside of the centre of the bead filler. (Of two points on the tyre, one is considered to be « axially on the outside » of the other when it is further away from the plane which is normal to the axis of rotation of the tyre and which lies mid-way between the annular reinforcing structures of each bead.) This problem can be solved by shortening the wrapped-around portion and by reinforcing the bead with an additional reinforcement armature which is positioned axially on the outside of the bead filler. Each additional reinforcement armature comprises at least one cord extending axially on the outside of the wrapped-around portion of the carcass reinforcement.

There are therefore two different approaches to improving the endurance of the bead by keeping the end of the carcass reinforcement away from the regions of greatest thermal and mechanical stress: either the wrapped-around portion is extended, so that the end of the carcass reinforcement lies radially on the outside of these regions (of two points on the tyre, one is considered to be « radially on the outside » of the other when it is further away from the axis of rotation of the tyre), or it is shortened, in which case the end of the carcass reinforcement lies radially on the inside of these regions.

The first approach has the disadvantage that it is necessary to provide a fairly long wrapped-around portion, which also means that the distance between the incoming portion of the carcass reinforcement and the end of the wrapped-around portion is reduced. As a result, when a crack appears in the end of the wrapped-around portion, it will reach the incoming portion before it reaches the exterior surface of the tyre. In other words, the defect will not become visible until some time after it has reached the incoming portion.

The second approach, for its part, makes the tyre more difficult to manufacture: when the carcass reinforcement is wrapped around the annular reinforcing structure, the wrapping is not as easy to perform with a shorter wrapped-around portion; there is not enough length available to fold the carcass reinforcement. In addition, there is a risk that the carcass reinforcement will be insufficiently anchored and more readily unwrap itself.

It has been proposed to solve this problem by winding the end around the bead wire, making it possible to increase the area of interface between the wrapped-around portion of the carcass reinforcement and the bead filler, while at the same time preventing the end of the carcass reinforcement from lying in an area of high thermomechanical stresses. Documents US 6,736,177, US 2006/0196591, US 2006/0207710 and US 2007/0056673 disclose various embodiments of this approach. The major disadvantage of this technical solution lies in the fact that it significantly complicates the manufacturing process.

### Summary of the invention

One object of the present invention is to provide a tyre with improved endurance without in any way making the manufacturing process more difficult.

This object is achieved by a heavy goods vehicle tyre, intended to be mounted on a rim with inclined seats, known as « drop » or « well-base » rim, the seats of which are extended by rim hooks which comprise, in radial section, a part in the form of a circular arc, the tyre comprising:
- a crown;
- two beads each comprising an annular reinforcing structure; and
- at least one radial carcass reinforcement which extends from one bead to the other and which is anchored in the two beads by being wrapped around the annular reinforcing structure, so as to form, within each bead, an incoming portion and a wrapped-around portion;
   the tyre being configured in such a way that, when the tyre is mounted on the rim and inflated, in at least one of the beads the following three conditions (A) to (C) are met:
   (A) an angle α (alpha) formed between:
      - the straight line L1 connecting:
         (i) the centre of the circular arc forming the rim hook and
         (ii) the radially outermost point of the wrapped-around portion of the carcass reinforcement, and
      - the axial direction,
         is greater than or equal to a first angle α1 of 30°, and less than or equal to a second angle α2 of 60°, the angle α (alpha) being measured in the clockwise direction starting from the straight line L1;
   (B) the minimum distance D between:
      - the incoming portion of the carcass reinforcement, and
      - the free end of the wrapped-around portion of the carcass reinforcement
         is less than or equal to 50% of the maximum distance Dₘₐₓ between the incoming portion and the wrapped-around portion of the carcass reinforcement, this distance being measured in a direction parallel to L1; and
   (C) the tyre further comprises, axially adjacent to the carcass reinforcement, an additional reinforcement armature the reinforcements of which are inclined by an angle of less than 45° with respect to the circumferential direction, and in which a third angle β formed between:
      - the straight line L2 connecting:
         (i) the centre of the circular arc forming the rim hook and
         (ii) the radially outermost point of the additional reinforcement armature, and
      - the axial direction
         is greater than or equal to the said second angle α2, and a fourth angle γ formed between:
      - the straight line L3 connecting:
         (i) the centre of the circular arc forming the rim hook and
         (ii) the radially innermost point of the additional reinforcement armature, and
      - the axial direction
      is less than or equal to the said first angle α1.

It has been found that a tyre according to the invention has excellent endurance. This result appears to be due to the fact that the free end of the wrapped-around portion of the carcass reinforcement is in a region of lower thermal and mechanical stresses, without there being any need to reinforce the bead with an additional reinforcement armature positioned axially on the outside of the bead filler (this additional reinforcement armature is sometimes referred to as « stiffener »). It should be noted that if such a stiffener was provided, it would in turn be exposed to the high stresses characteristic of this region. The presence of an additional reinforcement armature axially adjacent to the carcass reinforcement judiciously compensates for the absence of a stiffener. The manufacturing difficulties due to a wrapped-around portion that is very short or wound around the annular reinforcing structure, are also avoided.

As a preference, the additional reinforcement armature, axially adjacent to the incoming portion of the carcass reinforcement, is positioned between the incoming portion of the carcass reinforcement and the interior surface of the tyre. The « interior surface of the tyre » is to be understood here to mean the surface of the tyre intended to be in contact with the inflating gas. This embodiment has the advantage of avoiding introducing an end of a reinforcement armature into a region of high mechanical deformation and high thermal stress.

According to an alternative embodiment, the additional reinforcement armature, axially adjacent to the incoming portion of the carcass reinforcement, is positioned between the incoming portion of the carcass reinforcement and the exterior surface of the tyre. The « exterior surface of the tyre » is to be understood here to mean the surface of the tyre freely accessible when the tyre is mounted on the rim and inflated. This alternative embodiment is advantageous in so far as it simplifies the method of manufacture.

According to a preferred embodiment, the minimum distance D is less than 25% of Dₘₐₓ. The advantage of this embodiment lies in the fact that it becomes more difficult for the wrapped-around portion to become unwrapped.

As a preference, the reinforcements of the additional reinforcement armature are inclined by an angle of less than 5° with respect to the circumferential direction. Thus, the reinforcements act like bead wires, thus improving the firmness of the tyre.

According to one preferred embodiment, conditions (A) to (C) are met in both beads. A symmetric arrangement such as this simplifies the design of the tyre and the method of manufacture.

The additional reinforcement armature may be formed of a plurality of cords positioned on circles concentric with the axis of rotation of the tyre, but it is equally possible for the additional reinforcement armature to be formed by arranging one or more cords spiral-wound about the axis of rotation of the tyre. The cord or cords may in particular be fractionated, that is to say chopped (this may in particular be done at the time of laying) so that each turn of the spiral comprises a plurality of circular arcs, thus optimizing the movements of material when shaping the tyre and making the tyre easier to manufacture.

According to an advantageous embodiment, the minimum distance D is greater than 3 mm. Thus, it is possible to avoid having the incoming and wrapped-around portions too closely spaced, as such a spacing would be liable to initiate crack formation.

### Brief description of the drawings

Figure 1 shows part of a tyre of the prior art, mounted on a rim of the « drop » or « well-base » type, in radial section.

Figure 2 shows a detail of Figure 1.

Figure 3 shows part of a tyre according to the invention, in radial section.

Figure 4 shows an alternative embodiment to that depicted in Figure 3, with a different position for the additional reinforcement armature.

### Detailed description of the drawings

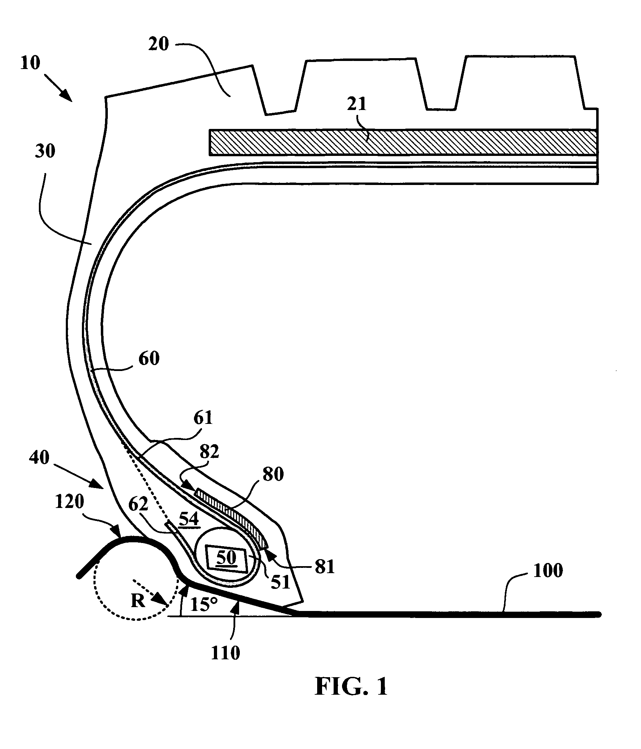

Figure 1 shows, in radial section, part of a tyre 10 according to the prior art, mounted on a rim 100, having seats 110 that are inclined with respect to the axial direction, here by an angle of 15°. The seat 110 is extended axially toward the outside by a rim hook 120 which comprises a part in the form of a circular arc. The radius R of this circular arc is also indicated. The tyre 10 comprises a crown 20 with a belt 21, surmounted by a tread. It also comprises two side walls 30 and two beads 40 each of which has an annular reinforcing structure 50, here in the form of a bead wire, surrounded by a « bead core » 51 made of rubber mix. The tyre 10 also comprises a carcass reinforcement 60 which extends from one bead 40 to the other and which is anchored in each of the two beads 40 by a turn-up. In each bead, it is therefore possible to draw a distinction between two parts of the carcass reinforcement 60: an « incoming portion » 61 which corresponds to that part of the carcass reinforcement which connects the bead 40 to the crown 20, and a « wrapped-around portion » 62 which anchors the reinforcement onto the annular reinforcing structure 50. In the context of this document, the boundary between the incoming portion 61 and the wrapped-around portion 62 in the bead depicted is considered to consist of the intersection of the carcass reinforcement 60 with a plane (not depicted) perpendicular to the axis of rotation of the tyre and passing through the radially innermost point of the carcass reinforcement 60.

The tyre 10 also comprises, axially on the inside of the carcass reinforcement 60, a reinforcement armature 80 formed of a plurality of cords positioned on circles concentric with the axis of rotation of the tyre and extending between a radially inner end 81, here located more or less level with the radially outermost part of the annular reinforcing structure 50, and a radially outer end 82. The cords can be inclined at an angle of between -45 and +45° with respect to the circumferential direction in order for the object of the invention to be achieved. However, such angle is preferably between -5° and +5° because then the cords of reinforcement armature 80 work like additional bead wires.

The position of the « bead filler » 54, formed of at least one rubber mix, is also marked in Figure 1, where its limit is schematically delineated by a dotted line.

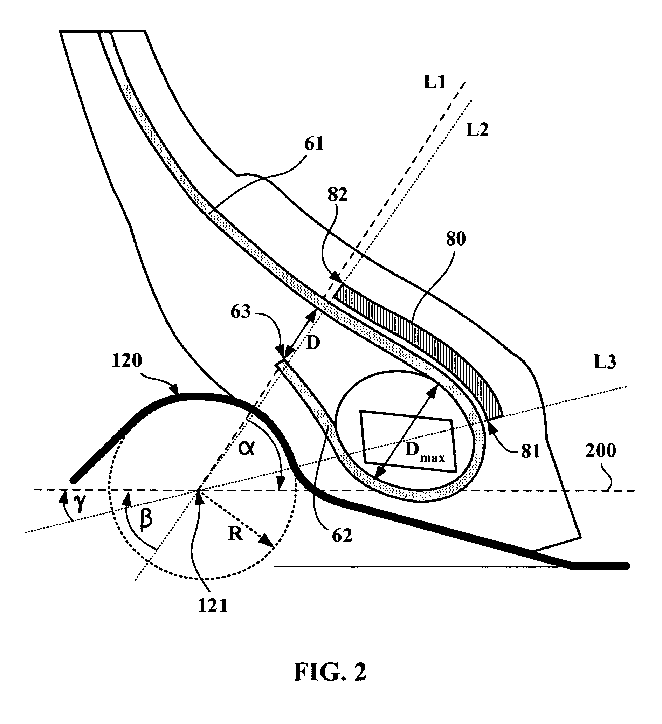

Figure 2 shows a detail of the tyre of Figure 1 and illustrates several parameters for characterizing the differences between a tyre according to the prior art and a tyre according to the invention. All these parameters are determined when the tyre 10 is mounted on the rim 100 and inflated to its operating pressure.

Reference 121 denotes the centre of the circular arc (radius R) forming the rim hook. Reference 63 denotes the radially outermost point of the wrapped-around portion 62 of the carcass reinforcement 60. The straight line L1 connects the centre 121 to the point 63. It makes an angle α (alpha) with the axial direction 200. In the context of this document, this angle is measured in the clockwise direction starting from the straight line L1. In this instance, the angle α measures 58°.

The minimum distance between the incoming portion 61 of the carcass reinforcement and the free end of the wrapped-around portion 62 is denoted D. The maximum distance between the incoming portion 61 and the wrapped-around portion 62, measured in a direction parallel to L1 is denoted Dₘₐₓ. In the tyre depicted, the ratio D/Dₘₐₓ is 60%.

There are two further angles that need still to be defined: let L2 be the straight line connecting the centre 121 of the circular arc forming the rim hook 120 to the radially outermost point 82 of the additional reinforcement armature 80. The angle β (beta) is then the angle formed between this straight line L2 and the axial direction 200. Likewise, if L3 denotes the straight line connecting the centre 121 of the circular arc forming the rim hook 120 to the radially innermost point 81 of the additional reinforcement armature 80, then the angle γ (gamma) is defined as the angle formed between this straight line L3 and the axial direction 200. In both instances, the angle is measured in the clockwise direction starting from the straight line concerned (L2 or L3). In this instance, β (beta) adopts a value close to that of the angle α (alpha), namely 57°, while γ (gamma) measures 14°.

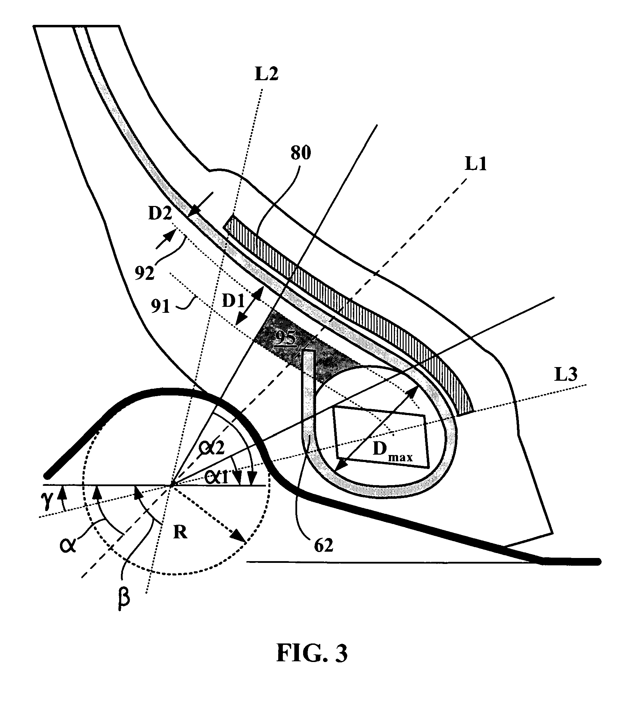

Figure 3 shows part of a tyre according to the invention, in radial section. The crown and the side wall are identical to the corresponding parts of the tyre 10 of Figure 1, only the bead has been altered: the wrapped-around portion 62 is wrapped further around the bead wire.

In a tyre according to the invention, the end of the wrapped-around portion 62 is such that the angle α (alpha), defined above, ranges between an angle α1 (alpha 1) of 30° and an angle α2 (alpha 2) of 60°. According to an advantageous embodiment, the angle α (alpha) ranges between an angle α1 (alpha 1) of 40° and an angle α2 (alpha 2) of 50°. In this instance, the angle α (alpha) is 48°. Condition (A) is therefore met.

The minimum distance D is less than a value D1 equivalent to 50% of the distance Dₘₐₓ. All of the points lying at the distance D1 from the carcass reinforcement are outlined by the curve 91. In the tyre depicted, the ratio D/Dₘₐₓ is 20%. Thus, condition (B) is also met.

Finally, the tyre according to the invention comprises an additional reinforcement armature 80. Unlike the tyre of Figure 1, this additional reinforcement armature 80 extends over a wider area, which is manifested by the fact that the angle β (beta), here 78°, is greater than the angle α2 (alpha 2) and that the angle γ (gamma), here 14°, is less than the angle α1 (alpha 1). Condition (C) is therefore also met.

The tyre depicted in Figure 3 corresponds to a preferred embodiment in as much as the distance D, here 6 mm, is greater than a minimum distance D2 of 3 mm. All of the points lying the minimum distance D2 from the incoming portion 61 of the carcass reinforcement 60 are outlined by the curve 92. The darker area 95 therefore corresponds to the region in which the free end of the wrapped-around portion 62 of the carcass reinforcement may lie such that conditions (A) to (C) are met and the minimum distance D is greater than or equal to D2.

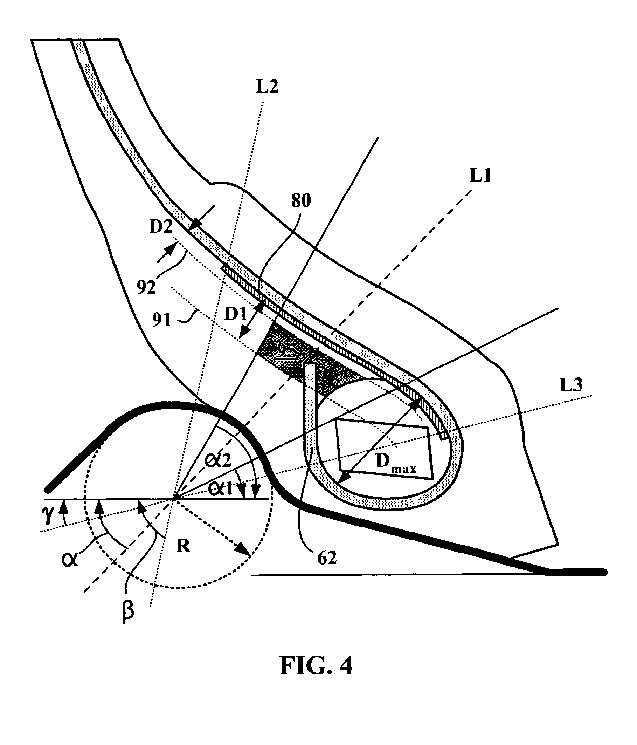

Figure 4 shows the same view as in Figure 3. However, the additional reinforcement armature 80 which is axially adjacent to the incoming portion 61 of the carcass reinforcement, is positioned between the incoming portion 61 and the exterior surface of the tyre.

Comparative running tests have demonstrated that a tyre according to Figure 3 (of the 295/60 R22.5 size) has longer endurance than a tyre according to Figure 1 (of the same size). This improvement was observed during tests of the « heated rim » type in which the resistance to unwrapping of the carcass reinforcement as a function of temperature proved to be greater (20% better) and also « bead breaking » tests (which consist in running a tyre under severe conditions in order to amplify the flexural deformations and cause breaks to be introduced into the ends of the wrapped-around portion of the carcass reinforcement or any additional reinforcement armatures) in which the improvement in endurance in terms of distance travelled is about 90% (52 000 km as against 27 000 km).

## Claims

1. Heavy goods vehicle tyre (10), configured to be mounted on a rim (100) with inclined seats (110), the seats of which are extended by rim hooks (120) which comprise, in radial section, a part in the form of a circular arc, the tyre comprising:
a crown; (20);
two beads (40) each comprising an annular reinforcing structure (50); and
at least one radial carcass reinforcement (60) which extends from one bead to the other and which is anchored in the two beads by being wrapped around the annular reinforcing structure, so as to form, within each bead, an incoming portion (61) and a wrapped-around portion (62);
**characterised in that** the tyre is configured in such a way that, when the
tyre is mounted on the rim and inflated, in at least one of the beads the following three conditions (A) to (C) are met:
(A) an angle α (alpha) formed between:
(a) the straight line L1 connecting:
(i) the center (121) of the circular arc forming the rim hook (120), and
(ii) the radially outermost point (63) of the wrapped-around portion of the carcass reinforcement; and
(b) the axial direction (200),
is greater than or equal to a first angle α1 of 30°, and less than or equal to a second angle α2 of 60°, the angle α (alpha) being measured in the clockwise direction starting from the straight line L1;
(B) the minimum distance D between:
(a) the incoming portion (61) of the carcass reinforcement, and
(b) the free end of the wrapped-around portion (62) of the carcass reinforcement
is less than or equal to 50% of the maximum distance Dₘₐₓ between the incoming portion and the wrapped-around portion of the carcass reinforcement, this distance being measured in a direction parallel to L1; and
(C) the tyre further comprises, axially adjacent to the carcass reinforcement, an additional reinforcement armature (80) the reinforcements of which are inclined by an angle of less than 45° with respect to the circumferential direction, and in which a third angle β formed between:
(a) the straight line L2 connecting:
(i) the centre (121) of the circular arc forming the rim hook (120), and
(ii) the radially outermost point (82) of the additional reinforcement armature; and
(b) the axial direction (200)
is greater than or equal to said second angle α2, and a fourth angle γ formed between:
(a) the straight line L3 connecting:
(i) the centre (121) of the circular arc forming the rim hook (120), and
(ii) the radially innermost point (81) of the additional reinforcement armature; and
(b) the axial direction (200)
is less than or equal to the said first angle α1.

2. Tyre according to Claim 1, in which the additional reinforcement armature (80), axially adjacent to the incoming portion (61) of the carcass reinforcement, is positioned between the incoming portion of the carcass reinforcement and the interior surface of the tyre.

3. Tyre according to Claim 1, in which the additional reinforcement armature (80), axially adjacent to the incoming portion (61) of the carcass reinforcement, is positioned between the incoming portion of the carcass reinforcement and the exterior surface of the tyre.

4. Tyre according to any one of Claims 1 to 3, in which the minimum distance D is less than 25% of Dₘₐₓ.

5. Tyre according to any one of Claims 1 to 4, in which the reinforcements of the additional reinforcement armature (80) are inclined by an angle of less than 5° with respect to the circumferential direction.

6. Tyre according to any one of Claims 1 to 5, in which conditions (A) to (C) are met in both beads.

7. Tyre according to any one of Claims 1 to 6, in which the additional reinforcement armature (80) is formed of a plurality of cords positioned on circles concentric with the axis of rotation of the tyre.

8. Tyre according to any one of Claims 1 to 6, in which the additional reinforcement armature (80) is formed of one or more cords spiral-wound around the axis of rotation of the tyre.

9. Tyre according to Claim 8, in which the cord or cords are fractionated so that each turn of the spiral comprises a plurality of circular arcs.

10. Tyre according to any one of Claims 1 to 9, in which the minimum distance D is greater than 3 mm.

## Patentansprüche

1. Schwerlastfahrzeug-Reifen (10), der konfiguriert ist, um an einer Felge (100) mit geneigten Sitzen (110) montiert zu werden, deren Sitze durch Felgenhaken (120) verlängert sind, die im radialen Schnitt einen Teil in Form eines Kreisbogens aufweisen, wobei der Reifen enthält:
eine Krone (20);
zwei Wulste (40), die jeweils eine ringförmige Verstärkungsstruktur (50) aufweisen; und
wenigstens eine radiale Karkassenverstärkung (60), die sich von einem Wulst zum anderen erstreckt und die in den beiden Wulsten verankert ist, indem sie um die ringförmige Verstärkungsstruktur gewunden ist, um so in jedem Wulst einen ankommenden Abschnitt (61) und einen darum gewundenen Abschnitt (62) zu bilden;
**dadurch gekennzeichnet, dass**
der Reifen in der Weise konfiguriert ist, dass dann, wenn der Reifen an der Felge montiert und aufgeblasen ist, in wenigstens einem der Wulste die drei folgenden Bedingungen (A) bis (C) erfüllt sind:
(A) ein Winkel α (Alpha), der gebildet ist zwischen:
(a) der geraden Linie L1, die:
(i) das Zentrum (121) des Kreisbogens, der den Felgenhaken (120) bildet, und
(ii) den radial äußersten Punkt (63) des darum gewundenen Abschnitts der Karkassenverstärkung verbindet; und
(b) der axialen Richtung (200), ist größer oder gleich einem ersten Winkel α1 von 30° und kleiner oder gleich einem zweiten Winkel α2 von 60°, wobei der Winkel α (Alpha) im Uhrzeigersinn beginnend bei der geraden Linie L1 gemessen wird;
(B) der minimale Abstand D zwischen
(a) dem ankommenden Abschnitt (61) der Karkassenverstärkung und
(b) dem freien Ende des darum gewundenen Abschnitts (62) der Karkassenverstärkung ist kleiner oder gleich 50 % des maximalen Abstands Dₘₐₓ zwischen dem ankommenden Abschnitt und dem darum gewundenen Abschnitt der Karkassenverstärkung, wobei dieser Abstand in einer Richtung parallel zu L1 gemessen wird; und
(C) der Reifen enthält ferner axial benachbart zu der Karkassenverstärkung einen zusätzlichen Verstärkungsanker (80), dessen Verstärkungen um einen Winkel von weniger als 45° in Bezug auf die Umfangsrichtung geneigt sind und in dem ein dritter Winkel β gebildet ist zwischen:
(a) der geraden Linie L2, die:
(i) das Zentrum (121) des Kreisbogens, der den Felgenhaken (120) bildet, und
(ii) den radial äußersten Punkt (82) des zusätzlichen Verstärkungsankers verbindet; und
(b) der axialen Richtung (200) größer oder gleich dem zweiten Winkel α2 ist und ein vierter Winkel γ, der gebildet ist zwischen:
(a) der geraden Linie L3, die
(i) das Zentrum (121) des Kreisbogens, der den Felgenhaken (120) bildet, und
(ii) den radial innersten Punkt (81) des zusätzlichen Verstärkungsankers verbindet; und
(b) der axialen Richtung (200) kleiner oder gleich dem ersten Winkel α1 ist.

2. Reifen nach Anspruch 1, wobei der zusätzliche Verstärkungsanker (80), der zu dem ankommenden Abschnitt (61) der Karkassenverstärkung axial benachbart ist, zwischen dem ankommenden Abschnitt der Karkassenverstärkung und der inneren Oberfläche des Reifens positioniert ist.

3. Reifen nach Anspruch 1, wobei der zusätzliche Verstärkungsanker (80), der zu dem ankommenden Abschnitt (61) der Karkassenverstärkung axial benachbart ist, zwischen dem ankommenden Abschnitt der Karkassenverstärkung und der äußeren Oberfläche des Reifens positioniert ist.

4. Reifen nach einem der Ansprüche 1 bis 3, wobei der minimale Abstand D kleiner ist als 25 % von Dₘₐₓ.

5. Reifen nach einem der Ansprüche 1 bis 4, wobei die Verstärkungen des zusätzlichen Verstärkungsankers (80) in Bezug auf die Umfangsrichtung um einen Winkel von weniger als 5° geneigt sind.

6. Reifen nach einem der Ansprüche 1 bis 5, wobei die Bedingungen (A) bis (C) in beiden Wulsten erfüllt sind.

7. Reifen nach einem der Ansprüche 1 bis 6, wobei der zusätzliche Verstärkungsanker (80) aus mehreren Kordlagen gebildet ist, die auf Kreisen positioniert sind, die zu der Drehachse des Reifens konzentrisch sind.

8. Reifen nach einem der Ansprüche 1 bis 6, wobei der zusätzliche Verstärkungsanker (80) aus einer oder mehreren Kordlagen gebildet ist, die spiralförmig um die Drehachse des Reifens gewunden sind.

9. Reifen nach Anspruch 8, wobei der oder die Kordlagen so unterteilt sind, dass jede Windung der Spirale mehrere Kreisbögen enthält.

10. Reifen nach einem der Ansprüche 1 bis 9, wobei der minimale Abstand (D) größer als 3 mm ist.

## Revendications

1. - Pneumatique (10) pour poids lourd, destiné à être monté sur une jante (100) à sièges inclinés dont les sièges sont prolongés par des crochets de jante (120) qui comportent, dans une coupe radiale, une partie en arc de cercle, le pneumatique comportant :
- un sommet (20) ;
- deux bourrelets (40) comportant chacun une structure annulaire de renforcement (50) ; et
- au moins une armature de carcasse (60) radiale qui s'étend d'un bourrelet à l'autre et qui est ancrée dans les deux bourrelets par un retournement autour de la structure annulaire de renforcement, de manière à former dans chaque bourrelet un brin aller (61) et un brin retour (62) ;
le pneumatique étant configuré tel que, lorsque le pneumatique est monté sur la jante et gonflé, dans au moins un des bourrelets les trois conditions suivantes (A) à (C) sont remplies :
(A) un angle α (alpha) formé entre :
- la ligne droite L1 reliant :
(i) le centre (121) de l'arc de cercle formant le crochet de jante (120) et
(ii) le point radialement le plus à l'extérieur (63) du brin retour de l'armature de carcasse, et
- la direction axiale (200)
est supérieur ou égal à un premier angle α1 de 30°, et inférieur ou égal à un deuxième angle α2 de 60°, l'angle α (alpha) étant mesuré dans le sens de rotation des aiguilles d'une montre, en partant de la ligne droite L1 ;
(B) la distance minimale D entre :
- le brin aller (61) de l'armature de carcasse, et
- l'extrémité libre du brin retour (62) de l'armature de carcasse est inférieure ou égale à 50 % de la distance maxi Dₘₐₓ entre le brin aller et le brin retour de l'armature de carcasse, mesurée selon une direction parallèle à L1 ; et
(C) le pneumatique comporte en outre, axialement adjacent à l'armature de carcasse, une armature de renforcement complémentaire (80) dont les renforts sont inclinés d'un angle de moins de 45° par rapport à la direction circonférentielle, et dans laquelle un troisième angle β formé entre :
- la ligne droite L2 reliant :
(i) le centre (121) de l'arc de cercle formant le crochet de jante (120) et
(ii) le point radialement le plus à l'extérieur (82) de l'armature de renforcement complémentaire, et
- la direction axiale (200)
est supérieur ou égal audit deuxième angle α2, et un quatrième angle γ formé entre :
- la ligne droite L3 reliant :
(i) le centre (121) de l'arc de cercle formant le crochet de jante (120) et
(ii) le point radialement le plus à l'intérieur (81) de l'armature de renforcement complémentaire, et
- la direction axiale (200)
est inférieur ou égal audit premier angle α1.

2. - Pneumatique selon la revendication 1, dans lequel l'armature de renforcement complémentaire (80), axialement adjacente au brin aller (61) de l'armature de carcasse, est placée entre le brin aller de l'armature de carcasse et la surface intérieure du pneumatique.

3. - Pneumatique selon la revendication 1, dans lequel armature de renforcement complémentaire (80), axialement adjacente au brin aller (61) de l'armature de carcasse, est placée entre le brin aller de l'armature de carcasse et la surface extérieure du pneumatique.

4. - Pneumatique selon l'une quelconque des revendications 1 à 3, dans lequel la distance minimale D est inférieure à 25 % de Dₘₐₓ.

5. - Pneumatique selon l'une quelconque des revendications 1 à 4, dans lequel les renforts de l'armature de renforcement complémentaire (80) sont inclinés d'un angle de moins de 5° par rapport à la direction circonférentielle.

6. - Pneumatique selon l'une quelconque des revendications 1 à 5, dans lequel les conditions (A) à (C) sont remplies dans les deux bourrelets.

7. - Pneumatique selon l'une quelconque des revendications 1 à 6, dans lequel l'armature de renforcement complémentaire (80) est formée d'une pluralité de câbles disposés sur des cercles concentriques à l'axe de rotation du pneumatique.

8. - Pneumatique selon l'une quelconque des revendications 1 à 6, dans lequel l'armature de renforcement complémentaire (80) est formée d'un ou plusieurs câbles enroulés en spirale autour de l'axe de rotation du pneumatique.

9. - Pneumatique selon la revendication 8, dans lequel le ou les câbles sont fractionnés de sorte que chaque spire de la spirale comporte une pluralité d'arcs de cercle.

10. - Pneumatique selon l'une quelconque des revendications 1 à 9, dans lequel la distance minimale D est supérieure à 3 mm.
